# EUROPEAN PATENT SPECIFICATION

(11) **EP 0 555 993 B1**
(45) Date of publication and mention of the grant of the patent: **13.08.1997**
(21) Application number: 93300833.6
(22) Date of filing: 04.02.1993
(51) Int. Cl.: D21H 27/28, B32B 29/00

(54) **The use of retention aids in the making of paper containing abrasive particles and abrasion resistant decorative laminates made therefrom**
Verwendung von Retentionshilfsmitteln zur Herstellung von Schleifpartikel enthaltendem Papier, und hergestellte abriebfeste dekorative Laminate
Utilisation d'agents de rétention dans la fabrication de papier contenant des particules abrasives, et laminés décoratifs résistant à l'abrasion obtenus

(30) Priority: 05.02.1992 US 831557; 26.01.1993 US 1052
(43) Date of publication of application: 18.08.1993
(73) Proprietor: Wilsonart International, Inc., Temple, Texas 76501 (US)
(72) Inventor: Gaa, Peter, Charles, Temple Texas 76503 (US); Hautala. Richard Roy, Temple Texas 76502 (US); Malina, Jerry Lee, Temple Texas 76502 (US); Pitts, Melvin, Temple Texas 76504 (US); Witham, Clyde Lester, Montara California 94037 (US); Ahner, Nancy Jo, Redwood City, California 94065 (US)
(74) Representative: Howden, Christopher Andrew

(56) References cited:
- EP-A- 0 186 257
- FR-A- 2 139 990
- GB-A- 1 348 272
- US-A- 4 741 946
- K.W.BRITT:Handbook of Pulp and Paper Technology, second edition, Van Nostrand Reinhold Co, New York 1970, page 639

## Description

### 1. Field of the Invention

The present invention relates to making paper containing abrasive particles and abrasion resistant laminate made therefrom. In another aspect, the present invention relates to the use of retention aids for increasing the retention of aluminum oxide particles in paper during the paper making process and abrasion resistant decorative laminates made with the resulting paper. In yet another aspect, the present invention relates to abrasion resistant decorative laminates having a high degree of abrasion resistance and a high initial wear point.

In still yet another aspect, the present invention relates to the use of retention aids for increasing the retention of aluminum oxide particles with a mean particle size of ten microns or less in paper during the paper making process and decorative laminates having a high degree of abrasion resistance and a high initial wear point made with the resulting paper as the top layer of the laminate.

### 2. Description of the Related Art

A decorative laminate generally comprises plural layers of synthetic resin impregnated sheets of paper consolidated or bonded together into a unitary structure under heat and pressure. In normal practice the decorative laminate assembly, from the bottom up, consists of a core of one or more sheets of paper impregnated with phenolic resin, above which lies a decorative sheet of paper impregnated with melamine resin. The core functions to impart rigidity to the laminate.

Prior to stacking, paper that is to be used as the core is impregnated with a water alcohol solution of phenolformaldehyde, dried and partially cured in a hot air oven, and then cut into sheets. Sheets of 147 to 244 grams per sq. metre (90 to 150 pound ream) kraft paper that have been impregnated with a water alcohol solution of phenolformaldehyde, dried and partially cured in a hot air oven can be used as the core.

A decorative sheet generally functions to give an attractive appearance to the laminate. The decorative sheet may be of a solid colour or may comprise a decorative design, or a photo-gravure reproduction of natural materials, such as wood marble, leather, etc.

The top layer of the decorative laminate, which may be a decorative sheet or an overlay sheet, gives the panel its surface characteristics (i.e. resistance to chemical agents, to heat, to light, to shock and to abrasion). The top layer of the decorative laminate can be a high quality 81 to 204 grams per sq. metre (50 to 125 pound ream) weight paper impregnated with a water-alcohol solution of melamine-formaldehyde resin, dried and partially cured, and cut into sheets. The high quality paper can be paper containing a high concentration of alpha-cellulose.

The laminate can be obtained by placing the resin impregnated sheets between steel caul plates and subjecting the laminate stack to temperatures in the range of about 110°C to about 171°C (230°F to about 340°F) and pressures in the range of about 54 - 109 bar (800 - 1600 psi) for a time sufficient to consolidate the laminate and cure the resins (generally about 25 minutes to an hour). This is thought to cause the resin in the paper sheets to flow, cure and consolidate the sheets into a unitary laminated mass referred in the art as a high pressure decorative laminate.

Decorative laminates have been widely employed in the building and furniture industry as counter and table tops, bathroom and kitchen work surfaces, wall panelling, partitions and doors. In many of these applications, especially high exposure areas such as dinette surface tops, check-out counters, etc., it is necessary that the decorative laminate possess a high degree of abrasion resistance.

The standard National Electrical Manufacturers Association (NEMA) test for abrasion resistance is NEMA test LD 3.1 In this test a laminate sample is clamped on a rotating disc, over which ride two weighted rubber wheels, faced with calibrated sandpaper strips. As the laminate surface is rotated under the wheels, the abrasive action of the sandpaper damages the decorative surface of the laminate. The NEMA standard for Class I laminates requires that the laminate, after 400 cycles, has no more than 50% of its pattern destroyed. The 50% end point is estimated by averaging the number of cycles at which the pattern shows initial wear (initial point or IP) and the number of cycles at which the pattern is completely destroyed (final point or FP).

In addition to the 400 cycle minimum, it is commercially desirable to have a high IP number. If a decorative laminate is prepared in a conventional manner, with a normal 35-40% resin content in the print or pattern sheet, but without an overlay sheet, the abrasion resistance will be only about 50-75 cycles. With specially formulated resins, and a resin content of about 50-55%, abrasion resistance can in some instances be extended up to about 150-300 cycles, but such laminates have a tendency to develop surface craze, and furthermore, they are quite difficult to prepare due to the difficulty of impregnating the print sheet in a uniform manner. However, more importantly, such laminates do not meet the 400 cycle minimum required by the NEMA standard.

Prior art methods for imparting abrasion resistance include use of a translucent overlay sheet as the uppermost structural member in the laminate or use of abrasive resistant particles either on the overlay sheet or the decorative sheet. It has long been the practice to place resin impregnated high quality paper as an overlay over the decorative sheet to impart wear and/or abrasion resistance to decorative laminates. Upon consolidating the laminate, the overlay sheet becomes transparent, permitting the decorative color, pattern or design of the decorative sheet to be seen. While the use of the overlay sheet increases the abrasion resistance of the decorative laminate, it has long been desired to eliminate the overlay sheet for several reasons. An overlay sheet adds substantial raw material costs to the manufacture of laminates, both the cost of the overlay paper itself, the cost of the resin used to impregnate the overlay paper and the in-process and handling losses of these materials.

In addition to the cost of the overlay, an intermediate layer of substantial thickness between the decorative sheet and the eyes of the viewer detracts significantly from the desired visual clarity of a decorative sheet. The cellulose fibers used to make overlay paper have a refractive index close to that of cured melamine-formaldehyde resin. The fibers are therefore almost invisible in the cured laminate, and permit the printed pattern to be seen with very little attenuation. However, modern printing techniques are making available very accurate reproductions of natural materials, particularly various wood veneer species. As these printed reproductions approach in appearance the natural veneer, even small amounts of haze or blur introduced by the overlay paper are disturbing visually and destroy much of the realism desired by the user.

Furthermore, the overlay contributes to the rejection rate of the laminate products produced. The impregnated, dry overlay sheet tends to attract small dirt particles because it develops static electricity charges during drying. This dirt is hard to detect and remove before laminating, and results in spoiled laminate sheets that cannot be reprocessed. In addition, the impregnated dried overlay is brittle and hand to handle without breakage. Such "crumbs" are accidentally trapped on the surface of the overlay and also result in visually defective sheets.

Finally, an overlay containing laminate, particularly those having a relatively high surface gloss, have a tendency to become dull very quickly when subjected even to only moderate abrasive wear. This is understandably unacceptable where glossy laminates are desired. It is well known that small, hard mineral particles dispersed in overlay paper, or in resin mixtures to coat the impregnated pattern sheet, can enhance the abrasion resistance of decorative laminates. See, for example, U.S.-A-3,135,643 to Michl, US-A-3,373,070 and US-A-3,373,071, both to Fuerst.

However, it is important to note that techniques such as those disclosed by the above Michl and Fuerst patents do not eliminate the overlay, but rather enhance the abrasion resistance of the overlap or provide an alternate form of overlay and associated resin. GB-A-1,348,272 which discloses electrostatic spraying abrasive resistant grains onto a damp resin impregnated decorative sheet, further discloses that prior art methods for eliminating the overlay sheet have both incorporated hard abrasion resistant particles into pump during the paper making process and adhered hard abrasion resistant particles to the surface of paper during the lamination process.

EP-A-0186257 discloses a process for making abrasion resistant decorative top sheets for laminates in which decorative paper is coated with a resin composition containing alumina. The paper absorbs the resin leaving a thin alumina layer on the surface of the resin-impregnated paper.

Britt: Handbook of Pulp and Paper Technology, page 639 discloses the use of cationic starches as retention aids for pigments and fibre fines, in papermaking.

U.S.-A-3,798,111, issued March 19, 1974, to Lane et al, and corresponding EP-A-2139990 disclose the use of abrasive particles, preferably alumina, which are incorporated in the top layer of a multiple layer decorative paper during its manufacture. Print can be applied to the top surface of the resulting paper for producing a decorative paper. This decorative paper may then be utilized in a laminate with no overlay to yield a decorative laminate meeting the 400 cycle minimum. In one example given in US-A-3798111 the top layer comprises 100% of alumina with a particle size of 40 µm, although the resultant product is said to have had a slightly decreased abrasion resistance as compared with an example having a top layer with 20% fibres and 80% alumina of 40 µm size.

In the making of paper, pulp is generally formed into one or more thin layers in a forming section, passed through a press section at which point it is considered paper, and then through a dryer section. Pulp from one or more headboxes can be laid down on the forming wire of a paper making machine. As the pulp moves along the forming section, vacuum dryers reduce the liquid content from a high of about 85 to 95 % to a low of about 10 to about 40 %. As the liquid is removed from the pulp, particles small enough to pass between the pulp fibres are carried out with the liquid.

Lane et all teach that particle size and particle size distribution are "quite important", with the useful range of average particle size in the range from 10 - 75 x 10⁻⁶ metres (10-75 µm), preferably 40 x 10⁻⁶ metres (40 µm). While the laminate of Lane *et al* meets the 400 cycle NEMA abrasion test minimum, it has been criticised in the prior art as having an unacceptable initial wear point, which is stated in related U.S.-A-4255480, 4305987, 4395452, 4430375 and 4400423, all to Scher *et al,* to be less than 100 cycles.

Scher *et al* disclose a coating for print paper comprising particles with a 20-50 µm average size that is coated without resin over unimpregnated decorative paper. The resulting decorative laminate without overlay made from such coated decorative paper is reported to meet the 400 cycle NEMA abrasion test minimum and have an initial wear point of up to 500 cycles. Scher *et al* further teaches that with particles below 20 x 10⁻⁶ metres (20 µm), abrasion resistance becomes poor.

U.S.-A-4971855 issued November 20, 1990, to Lex *et al,* discloses that the use of alumina or silica particles 9 x 10⁻⁶ metres (9 µm) or greater, such as those in the coating composition of Scher *et al,* causes scratches on the highly polished caul plates used to make glossy laminates. Such damage is expensive in terms of manufacturing down time, repair and replacement cost.

In an effort to prevent such damage to the caul plates, Lex *et al* discloses the use of 0.5 to 9 x 10⁻⁶ metres (0.5 to 9 µm) sized particles for use in the coating composition of Scher *et al,* which is applied to unimpregnated decorative paper. While Lex *et al* discloses a method for coating 0.5 to 9 x 10⁻⁶ metres (0.5 to 9 µm) abrasive resistant particles onto the surface of already formed unimpregnated decorative paper, Lex *et al* is silent as to how to incorporate such small particles into decorative paper during the paper making process.

During paper making, small particles in the pulp being deposited during the forming stage in the paper making process are carried out with the liquid. Therefore, the need exists for a method of making a paper useful in making decorative laminates having NEMA abrasion above 400 cycles and an initial wear point about 500 cycles. The need also exists for a process to incorporate such small particles into paper during the paper making process, without having them carried out with the liquid.

### SUMMARY OF THE INVENTION

According to one aspect of the invention, there is provided a process for producing abrasion resistant decorative laminate, comprising depositing on the forming wire in the wet section of a paper making machine, on an upper layer of paper making furnish, a composition comprising abrasive alumina particles but comprising no fibres, the double layer formed in this manner on the forming wire being then passed into a wet section press in the paper making machine and through a drying section with heated rolls and a calendering section to produce an abrasive-carrying paper, stacking a plurality of sheets of paper impregnated with at least one synthetic resin forming composition for producing a resulting stack, and consolidating the resulting stack under laminating conditions of temperature and pressure into a unitary structure, characterised in that less than 1 volume percent of said alumina particles have a particle size greater than 10 µm and more than 60 volume percent of said alumina particles have a particle size between 1 and 10 µm, said composition comprising an aqueous slurry comprising said alumina particles and a polyacrylamide retention aid, the polyacrylamide comprising 0.05% by weight of the abrasive particles.

Paper produced with retention aids for retaining the abrasive particles has commercially desirable abrasion resistance. Additionally the use of retention aids permits the incorporation of abrasive particles that are sufficiently small that the damage to caul plates is minimised during the production of decorative laminate. The aqueous slurry of abrasive particles and retention aid can also contain paper furnish. Aluminum oxide is commercially available and produces a commercially desirable abrasion resistant laminate.

Cationic, high molecular weight polyacrylamide retention aids have been found to retain greater than about 80 to 90 weight percent of aluminum oxide deposited on paper furnish during the paper making process. Decorative laminates can be produced with the paper of this invention that exceeds the NEMA standards for abrasion resistance.

The decorative laminate of this invention has abrasion resistant characteristics that have not heretofore been achieved by incorporating abrasive particles in paper. The retention aid serves to retain a substantial amount of the abrasive particles deposited on the pump in the resulting paper. The retention aid also permits the incorporation of abrasive particles having particle sizes that minimise damage to caul plates used for applying pressure during the laminating process.

The paper produced by the process of the present invention may be used as an overlap sheet or as the decorative sheet in manufacturing decorative laminate, or may be used both as the overlay and as the decorative sheet when additional abrasion resistance is required. Solid colour and printed decorative sheets can be made from paper produced by the process of this invention.

It is desirable to use abrasive particles in the present invention that are small enough not to cause significant damage to the caul plates utilised in the production of decorative laminates. Abrasive particles having a mean particle size of about 1 to about 10 x 10⁻⁶ metres (1 to about 10 µm) have been found to produce laminate having desirable abrasion resistance while not causing significant damage to the caul plates used in producing the laminate. It is thought that particles larger than 10 x 10⁻⁶ metres (10 µm) can cause damage to caul plates used in the production of decorative laminate. It is thought that particles less than about 1 x 10⁻⁶ metres (1 µm) may not impart substantial abrasion resistance to decorative laminate.

An example of a commercially available aluminum oxide abrasive particle useful in the present invention includes Aluchem AC-99. The following Table I illustrates a particle size distribution suitable for use in the present invention. Less than about 1 volume percent of the aluminum oxide of this product has particle sizes greater than about 10 x 10⁻⁶ metres (10 µm). It is thought that less than about 10 volume percent of the abrasive particles should have particle sizes greater than about 10 x 10⁻⁶ metres (10 µm). Greater than about 60 volume percent of the aluminum oxide of this product has particle sizes of about 1 to about 10 µm. The particle size distribution shown on Table I, was determined using Horiba CAPA-700 model particle size analyzer. It is noted that particle sizes can vary depending on the method and equipment used for determining particle size distribution.

**TABLE I:**

| DISTRIBUTION TABLE (BY VOL.) (K[D]=1) | | |
|---|---|---|
| DISTRIBUTION TABLE (BY VOL.) K[D] = 1 | | |
| D[Pa] | F[%] | U[%] |
| 40< | 0.0 | 100.0 |
| 40.0 - 30.0 | 0.0 | 100.0 |
| 30.0 - 20.0 | 0.0 | 100.0 |
| 20.0 - 10.0 | 1.0 | 100.0 |
| 10.0 - 9.00 | 5.0 | 99.0 |
| 9.00 - 8.00 | 7.0 | 94.0 |
| 8.00 - 7.00 | 6.0 | 87.0 |
| 7.00 - 6.00 | 7.6 | 81.0 |
| 6.00 - 5.00 | 7.2 | 73.4 |
| 5.00 - 4.00 | 8.1 | 66.2 |
| 4.00 - 3.00 | 8.6 | 58.1 |
| 3.00 - 2.00 | 13.0 | 49.5 |
| 2.00 - 1.00 | 24.0 | 36.5 |
| 1.00 - 0.90 | 2.2 | 12.5 |
| 0.90 - 0.80 | 2.1 | 10.3 |
| 0.80 - 0.70 | 1.9 | 8.2 |
| 0.70 - 0.60 | 2.1 | 6.3 |
| 0.60 - 0.50 | 1.7 | 4.2 |
| 0.50 - 0.00 | 2.5 | 2.5 |

The particles utilized in the present invention must have a hardness that is sufficient for the particular application for which the decorative laminate will be used. Generally for most applications, the particles utilized in the present invention will have a hardness of at least 6 on the Moh scale. Preferably particles utilized in the present invention will have a hardness of about 7 on the Moh scale, and most preferably, the hardness will be in the range of about 7 to about 10 on the Moh scale. Materials with a hardness of at least 6 on the Moh scale that are suitable for use in the present invention include aluminum oxide and silicon dioxide. Other abrasive materials that are thought to be useful in the present invention include aluminum boride, beryllium carbide, boron carbide, silicon carbide, tantalum carbide, titanium carbide, zirconium carbide, boron nitride, titanium nitride, spinel, diamond and mixtures thereof.

The abrasive particles that should be used for accomplishing the purpose of this invention will depend on factors such as economics, particle size, availability, color and end use. For example, for very light or white background colors, it is normally desirable to use essentially mineral particles with a refractive index similar to the refractive index of cured melamine-formaldehyde resin, such as aluminum oxide.

In the present invention, the amount of mineral particles utilized in the making of the paper of the present invention must be sufficient so that laminates formed from the produced paper will have the desired abrasion resistance and initial wear properties. Generally, the mineral particles will comprise in the range of about 1 to about 25 weight percent of this paper. Preferably, the abrasive particles will comprise in the range of about 2 to about 20 weight percent of this paper, and most preferably in the range of about 3 to 15 weight percent.

Examples of commercially available retention aids that have been found to produce paper having abrasive particles incorporated therein that produces decorative laminate with good abrasion resistance include Accurac 130, 171 and 181 from Americen Cyanamide Company. Accurac 130, 171 and181 are high molecular weight ( about 5-10 million) polyacrylamide polymers. Accurac 130 and 171 are anionic and Accurac 181 is cationic.

Abrasion resistance was determined by conducting scuff tests as described at Table II.of this application. Aluminum oxide was incorporated in the paper using a TAPPI standard sheet machine.The abrasion resistance of the laminate produced with Accurac 181 was superior to the laminate produced with Accurac 130 and 171. However, the abrasion resistance of the laminate produced with Accurac 130 and 171 was very good

The retention aid can be mixed in an aqueous slurry with the abrasive particles and deposited on the forming wire in the wet section of a paper making machine on an upper layer of paper making furnish.

The amount of retention aid utilized will be that amount necessary to retain a suitable amount of abrasive particles in the furnish during the forming step, such that laminates formed from the produced decorative paper will have sufficient abrasion resistance and initial wear properties.

Generally, the retention aid will be used in the range of about 0.01 to about 25 weight percent of the weight of the abrasive particle. Preferably, the retention aid will comprise in the range of about 0.02 to about 10 weight percent, and most preferably in the range of about 0.02 to about 5 weight percent based off the weight of the abrasive particles.

The abrasion resistant decorative laminate of the present invention is prepared in the conventional manner as is well known in the art.

The laminate is prepared by first forming a laminate stack comprising a core of one or more resin impregnated sheets and a top resin impregnated decorative sheet, wherein the decorative sheet prior to resin impregnation comprises one or more paper layers wherein at least the top layer of the one or more paper layers comprises from about 0.01 to about 25 weight percent of a particle retention aid based on the weight of the abrasive particles, and comprising from about 1 to about 75 weight percent abrasion resistant mineral particles based on the weight of the resulting paper, wherein essentially all of the particles have a particle size less than 10 x 10⁻⁶ metres (10 microns), and the top layer is a decorative layer. Next the laminate stack is consolidated into a decorative laminate by the use of heat and pressure.

### EXAMPLES

The Examples 1-8 presented below utilized the following standard procedure, with results presented in Table II. A decorative type base layer was formed on a 84 cm (33") wide paper machine with a basis weight of 109 gms per sq.m. (67 lbs/3000 sq. ft)(dry basis) for Examples 1 - 6 and on a 152 cm (60 in.) wide paper machine for Examples 7 and 8. This base sheet for Examples 1 - 6 consisted of standard ingredients such as bleached softwood pulp (Proctor & Gamble Grand Prairie refined to a 550 ml Canadian Std. Freeness), titanium dioxide, melamine formaldehyde wet strength resin (American Cyanamid Paramel HE), aluminum sulphate, and colorant (Ciba Geigy Irgalite GL). These materials were prepared and added to the paper machine under standard paper making conditions and then held constant throughout Examples 1 - 6. For example, the basis weight was controlled by adjusting the flow rate of the pulp from the storage chest. A standard pulper was used to disperse and mix these ingredients.

The abrasion resistant layer was applied on top of the wet pulp on the forming wire with the use of a secondary headbox which was located above the forming wire and before the wet press section press.

This double layer pulp formed in this manner on the forming wire then passed into a wet press section press, a drying section with steam heated rolls, a calendering section then rolled up on a winder. These rolls of dual-ply paper were later treated with a melamine formaldehyde resin, assembled with a phenolic resin impregnated kraft core stock then laminated in a press under standard decorative laminating conditions. The top layer of abrasion resistant material on the decorative paper was always on the top surface of the finished laminate. Alumina having the distribution shown in Table I above was utilized as the abrasive particles.

The paper control was made on the same machine without adding any material from the secondary headbox.

### EXAMPLE 1

In this example, the Proctor & Gamble grade 505 cotton linter was added to a pulper with a 0.35% consistency, transferred to the secondary headbox, and applied on top of the base pulp layer on the forming wire. This level of cotton linter was adjusted to provide a basis weight of 24 gms per sq metre (15 lbs/3000 sq. ft.) by controlling the flow rate of the pump to the secondary headbox.

### EXAMPLE 2

Aluminum Oxide (Aluchem AC-99, 9 micron average size) was added to the pulper with the cotton linter, then transferred and applied on top of the base pulp. The whitewater vacuumed from the forming wire was centrifuged and found to contain aluminum oxide. This indicates passage of this material through the cotton linter, base pulp and forming wire.

Aluminum oxide also collected on the metal surfaces of the secondary headbox.

### EXAMPLES 3 - 6

In this example, cationic polyacrylamide (American Cyanamid Accurac 181) was diluted to a 0.5% solution and then pumped into the transfer line between the pulper and the secondary headbox. The approximate dwell time of the polyacrylamide with the cotton linter and aluminum oxide was around 10 to 30 seconds.

The amount of polyacrylamide is reported as a weight percentage of the cotton linter fiber. The level of polyacrylamide add-on 0.02%, 0.2%, 0.3%, 0.75% was accomplished by increasing the flow rate of the acrylamide aqueous solution into the transfer line. A negligible amount of the aluminum oxide was found in the centrifuged samples of whitewater from the forming wire. No aluminum oxide was found collecting on the walls of the secondary headbox indicating the binding of the aluminum to the fibers.

### EXAMPLES 7 AND 8

In this example the retention aid and aluminum oxide were mixed and deposited through a secondary headbox, no fibres were used.

In Table II, the scuff resistance was determined according to the following method which measures the ability of the surface of the laminate to resist scuff abrasion from 100 grit aluminum oxide paper sandpaper being rubbed across the surface. The test apparatus comprises the following.
1. Straight-line washability and abrasion machine (Gardner Laboratories).
2. 100 grit aluminum oxide
   3M Company
   Three-M-ite ®
   Elek-Tro-Cut ®
   Cloth roll 7.6 cm (3") wide 100J Double Flex
   Cut into 7.6 x 25.4 cm (3" x 10") strips
3. A steel block 8.9 x 6.8 cm (3-1/2" x 2-11/16") covered with foam weatherstrip tip 2.5 x 1.1 cm (1" x 7/16"), Champ Service Item # 9-1494, Div. of Standard Motor Products Inc., St. Louis, MO 63130) on bottom and ends.
4. Sponge holder for washability machine (Gardner Laboratories).

The laminate test specimen is cut into a rectangle 10.2 x 45.7 cm (4" x 18") to be mounted to base of washability machine and held in place with masking tape. Next, wrap sanding cloth around steel/padded block and attach with masking tape, insert in holder and attach holder to machine. Set stroke counter at zero and start machine. Stop machine after 50 strokes. Remove specimen and wash with clean water and a sponge soaked in soapy water. Dry and examine the surface for scratching. The samples were graded using a modified grading scale ranging from 1 (worst) to 10 (best). The 1 and 10 on this modified scale corresponded to 1 and 6, respectively, on the ISO scale, with a linear relationship between the scales.

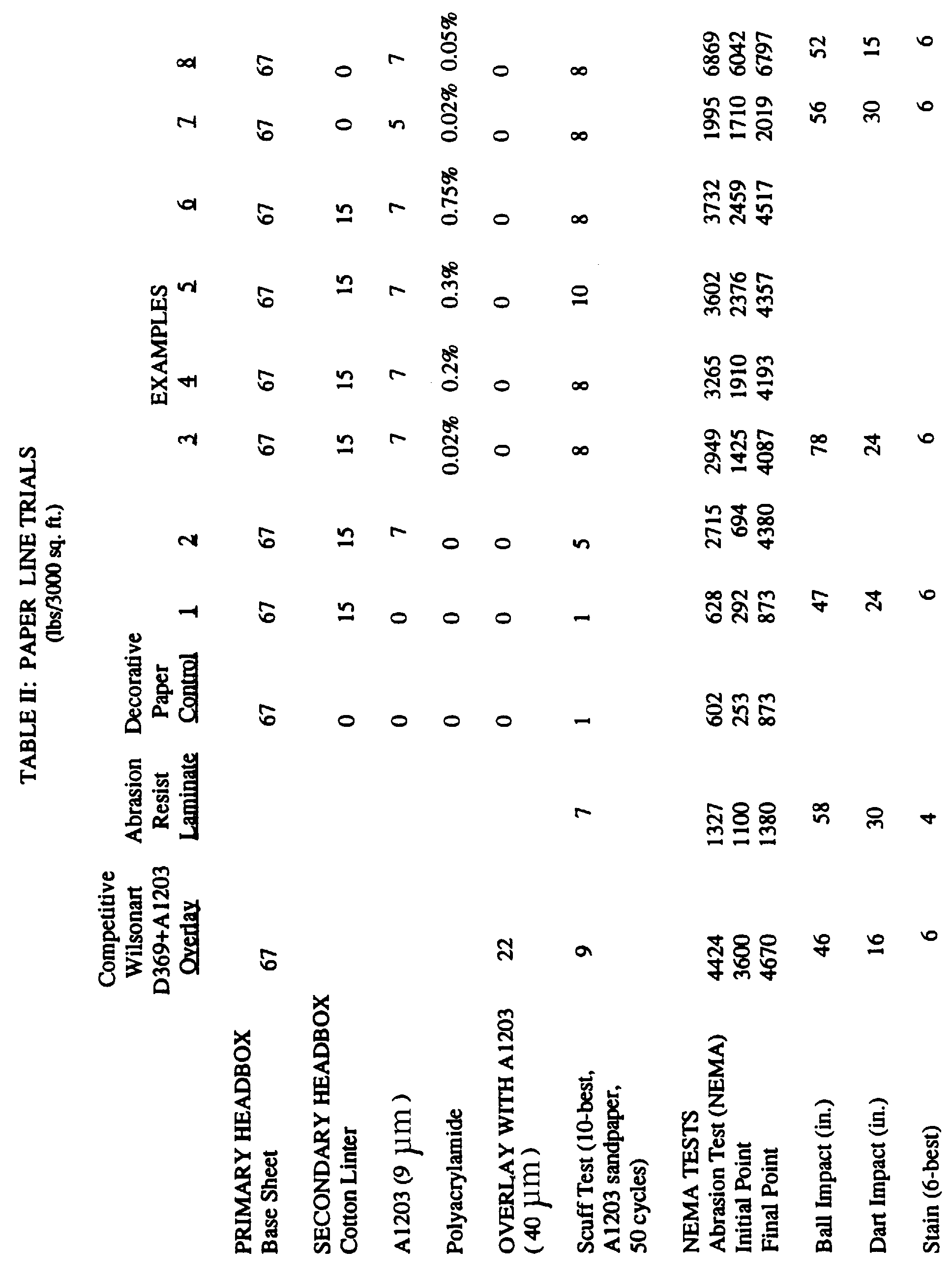

### EXAMPLE 10

In this example, damage to press plates by laminates containing four types of alumina particles was determined.

### PLATE PREPARATION

The size of the plate to be used in the experiment is limited by the dimensions of the press platen and the maximum load of the press. The platen has 61 cms (24") as its maximum dimension, and the press load limit is 68,100 kilograms (75 tons). Since the most thermal expansion will occur with the longest possible plate (which would produce the longest possible scratch), 61 cms (24") was chosen as one of the dimensions. The press needs to achieve a pressure of 71 bar (1040 psi) to cure the laminate, so due to the limit of a 68,100 kilograms (75 tons) load, the other dimension has a maximum of 15 cms. (6"). Thus a set of 6 plates was cut to 6 cm. by 15 cm. (24" by 6"), which would produce scratches of sufficient length and a variety of shapes.

Since it is impractical to monitor the successive build-up of scratches on an entire 6 cm. by 15 cm. (24" y 6") laboratory plate, three representative areas were selected in approximately the same location on each plate, one in the centre and two in opposite corners. Each area is approximately 1 cm² and the perimeters were marked by etching the stainless steel with Violl's reagent (a stainless steel etch containing glycerol, hydrochloric acid and nitric acid). Each plate was also labelled by etching to identify the type of alumina particle it was to be pressed against. Thus three 1 cm² areas will be monitored on each of five 6 cm. by 15 cm. (24" by 6") plate faces for ten successive press cycles.

### LAMINATE PRODUCTION

For each press cycle, two laminates for each of the following were pressed: control (no alumina), 1.1 micron diameter alumina, -325 mesh alumina, spherically shaped alumina, and an alumina overlay (labelled 822 with the side labelled "TOP" facing the plate). The laminates were produced by forming a single stack using both sides of 4 of the plates and one side of the 2 plates at the top and bottom of the stack. Each laminate is made from one layer of decorative b-staged paper top-coated side towards the plates, 2 layers of phenolic, and one layer of a release sheet which allows two laminates to be pressed back to back without sticking together. The completed stack is placed into the press using 4 layers of kraft paper for cushion and a foil layer between the brass platens and the outer steel plates of the stack. The same stacking configuration was repeated throughout the experiment.

For curing the laminates, the press was loading to 68,100 kilograms (75 tons) which results in a pressure of 71 bar (1040 psi) for a 6 cm. by 15 cm. (24" by 6") plate. The platen heaters were then turned on for a period of one hour. The temperature was measured using a thermocouple located between the release layers at the edge of the two plates at the center of the stack. The temperature usually reaches 138°C (280 degrees F) after 45 minutes and remains at 138°C (280°F) for the remainder of the heating period. At this time the heaters are turned off and cooling water is circulated through the platens. The thermocouple cools to 38-49°C (100-120 F) in about 15 minutes, at which time the load is released and the laminates are removed from the press. Ten press cycles were performed in this experiment.

### PLATE EXAMINATION

After each press cycle, the plates were taken to a metallography lab for examination. For the overlay plate, a 15X magnification photo was taken in each of the three regions for each cycle. For the 1.1 x 10⁻⁶metres (1.1 micron) -325 mesh, and the spherical plate, a 40X photo was taken within the center area only for each cycle. After the first, fifth, and tenth cycles, a 12.5X photomosaic was made of the entire center area for the 1.1 x 10⁻⁶ metres (1.1 micron) -325 mesh, and spherical plates. The density of the scratches varies throughout the plate. There are regions that seem to be scratched with each press cycle, and other regions which are only scratched during one or two of the press cycles. The size and shapes of the scratches varies with the location on the plate. The scratches generally appear longer at points away from the center of the plate.

For the purpose of obtaining a permanent record of the wear damage from each press cycle in the three regions of the five plates, the method of surface replication was used. Using this process, a negative or inverse image of the plate having excellent detail can be obtained. This process also makes it possible to view the wear damage in a scanning electron microscope. A thin film of acetobutyrate is softened with a solvent and applied to the region to be replicated, where it flows into the scratches in the plate. When the solvent dries, the film retains the topography of the plate. In this experiment, 100 x 10⁻⁶ metres (100 micron) thick Triafol replicating sheet available from Ted Pella, Inc., Redding, CA (cat. no. 44848) was used with a few drops of acetone to make the replicas.

To prepare the replicas for viewing, they were first glued flat to a glass slide since they tended to curl upon drying. A thin layer of silver was then vapor deposited on the replica using a Denton Vacuum Desk-1A Cold Sputter-Etch unit. The replicas were then viewed in a light microscope. The detail of the replicas is so excellent that even the slight machine marks and the etched outlines from the plates are obvious. Photomosaics at 12.5X were made from the replicas of the circular region from the -325 mesh alumina and of the diamond region of the spherical alumina for the first, fifth and tenth cycles.

### DAMAGE MEASUREMENTS

Scratch Quantification: The scratches were quantified by counting the number of scratches observed on replicas of the etched regions from each plate for 1, 5, and 10 press cycles. Each replica was viewed on a metallograph at a magnification of 50, and the image was viewed on a monitor. Image Analysis software was used to count the number of scratches on the monitor screen. At 50X, the scratches were clearly evident, but the entire region to be observed had to be divided into smaller frames. The number of scratches in each frame was added to obtain the number of scratches in the region. The total number of scratches within each region was divided by the area within that region to obtain the scratch density, or the number of scratches per unit area

**TABLE III**

| Number of cycles | Alumina overlay | -325 mesh alumina | Spherical alumina | 1.1 µm diameter alumina |
|---|---|---|---|---|
| 1 | 6.9/mm² | 4.9 | 1.4 | 0.4 |
| 5 | 10.8 | 7.7 | 3.0 | 0.6 |
| 10 | 14.4 | 9.1 | 5.5 | 1.9 |

Scratch Observations: The buildup of the scratches after each press cycle was observed using the 40X photos from the center region of the 1.1 micron, -325 mesh, and spherical plates. At 40X, a 3.5 by 4.5 inch photo corresponds to an actual plate observation area of 6.35 mm² (3.48 mm² was observed for the spherical plate due to misalignment of the successive photos). For each press cycle, the number and size of the scratches in the photo were noted. Thus, the number and size of the new scratches after each press cycle were determined:

**TABLE IV**

| Number of Cycles | -325 mesh (6.35 mm²) | Spherical (3.48 mm²) | 1.1 µm (6.35 mm²) |
|---|---|---|---|
| 1 | 18 new scratches | 47 | 6 |
| 2 | 8 | 0 | 0 |
| 3 | 0 | 5 | 10 |
| 4 | 4 | 0 | 0 |
| 5 | 0 | 0 | 0 |
| 6 | 0 | 0 | 0 |
| 7 | 0 | 3 | 0 |
| 8 | 0 | 9 | 1 |
| 9 | 0 | 0 | 0 |
| 10 | 3 | 0 | 0 |
| Total | 33 (5.2/mm²) | 64 (18.4/mm²) | 7 (1.1/mm²) |

### EXAMPLE 11

Tests were conducted to determine the retention characteristics of four commercially available cationic polymers. The retention characteristics were determined by depositing paper furnish containing aluminium oxide on the screen of a TAPPI Standard Sheet Machine Model S-50-4 Handsheet machine with a 16.9 cms (6.25 inch) diameter screen. Without the use of a retention aid, about 48 weight percent of the aluminum oxide was retained within the resulting paper. With Acccurac 181 cationic (10 percent) high molecular weight (5 to 10 million) polyacrylamide retention aid available from American Cyanamid Company about 82 weight percent of the aluminum oxide was retained within the resulting paper. With DPP-1813 cationic (15 percent), high molecular weight (6 to 8 million) polyacrylamide retention aid available from Betz Paperchem, Inc. about 83 weight percent of the aluminum oxide was retained within the resulting paper. With Polyplus 695 cationic (10 percent), high molecular weight (6 to 8 million) polyacrylamide retention aid available from Betz Paperchem, Inc., about 94 weight percent of the aluminum oxide was retained within the resulting paper. With DPP-1878 cationic (40 percent). high molecular weight (6 to 8 million) polyacrylamide retention aid available from Betz Paperchem. Inc. about 52 weight percent of the aluminum oxide was retained within the resulting paper.

These tests were conducted by depositing sufficient furnish to produce a 109 gms per sq m (67 pound) sheet along with sufficient water to fill the TAPPI handsheet machine to the 6800 milliliter level. When the liquid level in the handsheet machine reaches the 2200 milliliter level, an aqueous slurry of aluminum oxide particles and the retention aid is added. The resulting paper is weighed to determine the amount of aluminum oxide retained in the resulting sheet.

## Claims

1. A process for producing abrasion resistant decorative laminate, comprising depositing on the forming wire in the wet section of a paper making machine, on an upper layer of paper making furnish, a composition comprising abrasive alumina particles but comprising no fibres, the double layer formed in this manner on the forming wire being then passed into a wet section press in the paper making machine and through a drying section with heated rolls and a calendering section to produce an abrasive-carrying paper, stacking a plurality of sheets of paper impregnated with at least one synthetic resin forming composition for producing a resulting stack, and consolidating the resulting stack under laminating conditions of temperature and pressure into a unitary structure, characterised in that less than 1 volume percent of said alumina particles have a particle size greater than 10 µm and more than 60 volume percent of said alumina particles have a particle size between 1 and 10 µm, said composition comprising an aqueous slurry comprising said alumina particles and a polyacrylamide retention aid, the polyacrylamide comprising 0.05% by weight of the abrasive particles.

2. The process according to claim 1 wherein the polyacrylamide retention aid comprises a cationic, high molecular weight polyacrylamide polymer.

## Patentansprüche

1. Verfahren zum Herstellen eines abriebfesten dekorativen Laminats, welches das Aufbringen einer Mischung, welche abrasive Aluminiumoxidpartikel enthält, aber keine Fasern enthält, auf dem Formsieb in dem Naßabschnitt einer Papiermaschine auf einer oberen Schicht eines Papierherstellungseintrags, wobei die auf diese Weise auf dem Formsieb gebildete Doppelschicht dann zu einer Naßpresse in der Papiermaschine und durch einen Trockenabschnitt mit geheizten Walzen und einen Kalanderabschnitt gefördert wird, um ein Abrasivstoffe tragendes Papier zu erzeugen, das Stapeln mehrerer Bögen von Papier, das zumindest mit einer ein synthetisches Harz bildenden Mischung imprägniert ist, um daraus einen Stapel herzustellen, und das Konsolidieren des resultierenden Stapels zu einer einheitlichen Struktur unter Laminierbedingungen für den Druck und die Temperatur umfaßt, dadurch gekennzeichnet, daß weniger als 1 Volumenprozent der Aluminiumoxidteilchen eine Teilchengröße von mehr als 10 µm aufweisen und mehr als 60 Volumenprozent der Aluminiumoxidteilchen eine Teilchengröße zwischen 1 µm und 10 µm aufweisen, wobei die Mischung einen wässrigen Schlamm umfaßt, der die Aluminiumoxidteilchen und ein Polyacrylamid-Retentionshilfsmittel enthält, wobei das Polyacrylamid 0,05 Gewichtsprozent der abrasiven Teilchen umfaßt.

2. Verfahren nach Anspruch 1, bei der das Polyacrylamid-Retentionshilfsmittel ein kationisches Polyacrylamidpolymer mit einem hohem Molekulargewicht umfaßt.

## Revendications

1. Procédé de fabrication d'un stratifié décoratif résistant à l'abrasion, comprenant le dépôt sur une toile de formation dans la partie humide d'une machine à fabriquer le papier, sur une couche supérieure de base formant le papier, d'une composition comprenant des particules d'alumine abrasives mais ne comprenant pas de fibres, la double couche formée de cette manière sur la toile de formation étant ensuite passée dans une presse en partie humide dans la machine de fabrication de papier et dans une partie de séchage avec des rouleaux chauffants et une partie de calandrage pour produire un papier supportant un abrasif, l'empilement d'une pluralité de feuilles de papier imprégnées avec au moins une composition formant une résine synthétique pour produire un empilement résultant, et la consolidation de l'empilement résultant sous des conditions de stratification de température et de pression dans une structure unitaire, caractérisé en ce que moins de 1 pour-cent en volume desdites particules d'alumine ont une taille particulaire supérieure à 10 µm et plus que 60 pour-cent en volume desdites particules d'alumine ont une taille particulaire entre 1 et 10 µm, ladite composition comprenant une dispersion aqueuse comprenant lesdites particules d'alumine et un agent polyacrylamide d'aide à la rétention, le polyacrylamide comprenant 0,05 % en poids des particules abrasives.

2. Procédé selon la revendication 1, caractérisé en ce que l'agent d'aide à la rétention comprend un polymères polyacrylamide cationique à poids moléculaire élevé.
